# EUROPÄISCHE PATENTANMELDUNG

(11) **EP 3 614 476 A1**
(43) Veröffentlichungstag der Anmeldung: **26.02.2020**
(21) Anmeldenummer: 18190360.0
(22) Anmeldetag: 23.08.2018
(51) Int. Cl.: H01M 10/04, H01M 10/052, H01M 10/058

(54) **LITHIUM-IONEN-AKKUMULATOR IN SANDWICHBAUWEISE UND VERFAHREN ZU DESSEN HERSTELLUNG**

(71) Anmelder: Siemens Aktiengesellschaft, 80333 München (DE)
(72) Erfinder: Doye, Christian, 13156 Berlin (DE); Jensen, Jens Dahl, 14050 Berlin (DE); Krüger, Ursus, 14089 Berlin (DE); Winkler, Gabriele, 13587 Berlin (DE)

(57) **Zusammenfassung**

Die Erfindung betrifft einen Lithium-Ionen-Akkumulator 11, aufweisend ein Elektrolyt E indem eine Kathode K und eine von dieser durch einen Separator getrennte Anode A vorgesehen sind. Außerdem betrifft die Erfindung ein Verfahren zur Herstellung eines solchen Akkumulators 11. Bei diesem Akkumulator ist ein erster Kollektor als Minuspol M des Akkumulators an der Anode und ein zweiter Kollektor als Pluspol P des Akkumulators an der Kathode vorgesehen. Der Akkumulator weist eine Sandwich-Struktur auf wobei dessen jeweils äußerste Lagen durch einen Minuspol M und dem Pluspol P gebildet sind. Erfindungsgemäß ist vorgesehen, dass die Anode A und die Kathode K zwischen dem Pluspol P und dem Minuspol M lateral nebeneinander angeordnet sind. Mit anderen Worten ist die Anordnung senkrecht zum durch den Pluspol P und den Minuspol M gebildeten Sandwich ausgerichtet. Dabei werden die Anode A und die Kathode K durch den Elektrolyten und den Separator voneinander getrennt. Hierdurch ergibt sich vorteilhaft eine Anordnung, bei der auch eine hohe Kapazität und Leistungsdichte des Akkumulators erreicht werden kann. Dabei können die Ströme jeweils über die Stirnseiten der Anoden und Kathoden fließen, wodurch die hohe Leistungsdichte gewährleistet wird.

## Beschreibung

Die Erfindung betrifft einen Lithium-Ionen-Akkumulator, aufweisend einen Elektrolyt, in dem eine Kathode und eine von dieser durch einen Separator getrennte Anode vorgesehen sind, wobei ein erster Kollektor als Minuspol des Akkumulators an der Anode und ein zweiter Kollektor als Pluspol des Akkumulators an der Kathode vorgesehen ist, wobei der Akkumulator als Sandwichstruktur ausgebildet ist, deren jeweils äußeren Lagen durch den Minuspol und den Pluspol gebildet werden.

Außerdem betrifft die Erfindung ein Verfahren zum Herstellen eines Lithium-Ionen-Akkumulators, aufweisend einen Elektrolyt, in dem eine Kathode und eine von dieser durch einen Separator getrennte Anode vorgesehen sind,
- wobei ein erster Kollektor als Minuspol des Akkumulators an der Anode und ein zweiter Kollektor als Pluspol des Akkumulators an der Kathode vorgesehen wird,
- wobei der Akkumulator als Sandwichstruktur ausgebildet wird, deren jeweils äußeren Lagen durch den Minuspol und den Pluspol gebildet werden.

Lithium-Ionen-Akkumulatoren werden in modernen transportablen elektronischen Geräten (mobile Telefone, Tablets, Notebooks), sowie in der modernen Fahrzeugtechnik (Auto, Flugzeug) und auch in der Raumfahrttechnik eingesetzt. Gegenüber anderen Batterietypen weisen Lithium-Ionen-Akkumulatoren eine hohe Energiedichte, eine hohe Leistungsdichte und eine hohe Nennspannung, sowie eine höhere Anzahl von möglichen Ladezyklen auf, bevor der Akkumulator an Leistung und Kapazität verliert. Zum Betreiben von Autos und Flugzeugen wäre eine weitere Zunahme der Energiedichte und Leistungsdichte wünschenswert, um einerseits das Gewicht der Akkumulatoren zu reduzieren und andererseits die Reichweite der genannten Verkehrsmittel zu verlängern.

Um Lithium-Ionen-Akkumulatoren (im Folgenden auch kurz Akkumulatoren genannt) herstellen zu können, sind unterschiedliche Fertigungsverfahren bekannt. In der jüngeren Vergangenheit sind insbesondere auch additive Fertigungsverfahren für die Herstellung von schichtartig aufgebauten Lithium-Ionen-Akkumulatoren beschrieben worden. Hierbei können vorzugsweise dass additive Fertigungsverfahren Fused Deposition Molding (kurz FDM) und Fused Filament Fabrication (kurz FFF genannt) zum Einsatz kommen.

Auf den 231. ECC (Meeting) wurde am 4. Oktober 2017 ein typischer Aufbau für einen Lithium-Ionen-Akku in Sandwichbauweise vorgestellt. Dieser könnte gemäß einem Beispiel in einem Brillenbügel untergebracht werden, um eine Anwendung in der Brille mit elektrischem Strom zu versorgen. Der Sandwichaufbau besteht aus einer Schichtfolge, bestehend aus einem Kollektor, einer Kathode, einem Separator, einer Anode, einem weiteren Kollektor sowie dem Gehäuse, welches durch den Brillenbügel zur Verfügung gestellt wird.

Die konventionellen Lithium-Ionen-Akkumulatoren sind zwei dimensional (also Schicht für Schicht, wobei die Dicke der Schichten gering im Verhältnis zur Flächenausdehnung ist) aufgebaut und bestehen aus Anoden, Kathoden und Separatoren. Dabei werden die Elektroden und Separatoren entweder mit den zueinander parallelen Komponenten schichtweise gestapelt oder gewickelt. Elektrochemisch aktive Materialien werden gemahlen und anschließend mit einem Binder (meist PVDF, Polyvinylidenfluorid) und Ruß vermischt. Diese Mischung wird in einem Dispersionsmittel, z.B. N-Methyl-2-pyrrolidon (NMP), zu einem Slurry dispergiert. Anschließend wird diese Aufschlämmung auf ein elektrisch leitendes Trägermaterial (Kupfer bei der Anode, Aluminium bei der Kathode) gerakelt oder gerollt. Der aufgerakelte Slurry wird getrocknet, damit das Dispersionsmittel verdampft. Nach dem Trocknen folgt ein Kalander-Prozess, bei dem die Oberfläche durch Walzen verdichtet und geglättet wird. Die Folien mit dem Aktivmaterial werden nun zu passenden Größen geschnitten und können als Elektroden verwendet werden. Diese Elektroden werden nach dem Stapeln oder Wickeln mit einem Lithiumsalz-haltigen Elektrolyten injiziert und anschließend verpackt.

Dünne Schichtelektroden, Stromkollektoren, Separatoren und feste Elektrolyte in kommerziellen Film-Lithium-Batterien für Mikrodevices werden durch Sputtern oder andere Verdampfungsmethoden hergestellt. Diese Verfahren und Methoden sind aus der Halbleiter- und optischen Industrie bekannt und schließen Magnetron Sputtering, Pulsed Laser Deposition, Electron Beam Evaporation und Chemical Vapor Deposition ein. Dabei ist die Länge und Breite dieser Dünn-Film-Batterien erheblich (10 Mal) größer als die Dicke und die Dicke kleiner als 0,5 mm.

Eine Miniaturisierung solcher Lithium-Ionen-Batterien bei gleichzeitiger Erhöhung der Kapazität wird heute labormäßig durch ein 3D Druckverfahren erreicht. Elektrochemisch aktive Materialien wie Lithiumeisenphosphat (LFP) mit Kohlenstoff (Graphenoxid oder C-Nanokristall mit Mn gedopt) als Kathode und ein Lithiumtitanat Komposit Li4Ti5O12 (LTO) als Anode werden in einer Lösung aus deionisiertem Wasser, Ethylengykol, Glyzerin und einem auf Cellulose basierenden Viskositätsmittel dispergiert. Die beiden so erhaltenen Tinten, (LFP für die Kathode und LTO für die Anode) werden durch eine Extrusion-basierte 3D Drucktechnologie auf ein Glassubstrat mit Stromkollektoren aufgebracht. Dabei wird die Partikeldispersion unter Druck kontinuierlich aus einer Düse herausgepresst, um einen schichtbasierten Sandwich zu erzeugen.

Eine feste Elektrolyt-Tinte, die aus Polyvinylideneflouridco-hexafluoropropylen und Al2O3-Nanopartikeln besteht, wird ebenfalls zwischen Anode und Kathode gedruckt. Dieser Layer ist sowohl Elektrolyt als auch Separator. Die bisher im Labor hergestellten 3D Lithium-Ion-Batterien haben bei einer Größe von 7 mm * 3 mm und einer Schichtdicke von 0,18 mm eine dreifach höhere Kapazität als eine in Größe und Dicke entsprechende Dünnefilm-Lithium-Ion-Batterie. Bei einer Steigerung der Schichtdicke geht dieser Performancegewinn jedoch verloren.

Die Aufgabe der Erfindung besteht demnach darin, ein Verfahren zum Herstellen eines Lithium-Ionen-Akkumulators bzw. den Lithium-Ionen Akkumulator selbst anzugeben, wobei dieser Lithium-Ionen Akkumulator bei geringem Gewicht eine möglichst große Kapazität sowie Leistungsdichte gewährleistet.

Diese Aufgabe wird für den eingangs angegebenen Akkumulator erfindungsgemäß dadurch gelöst, dass die Anode und die Kathode zwischen dem Pluspol und dem Minuspol lateral nebeneinander angeordnet sind. Außerdem sind die Anode und die Kathode durch den Elektrolyt und den Separator voneinander getrennt, wobei diese Trennung ebenfalls in lateraler Richtung gesehen zwischen den Anoden und den Kathoden liegt. Als laterale Richtung soll eine sich entlang des Minuspols und des Pluspols erstreckende Richtung aufgefasst werden.

Die negativ geladene Elektrode gibt den Minuspol. Beim Entladen handelt es sich hierbei um die Anode, beim Laden um die Kathode. Dementsprechend ergibt die positive Elektrode als der Pluspunkt beim Entladen die Kathode und beim Laden die Anode. Die Kollektoren sind jeweils elektrisch nur mit der Kathode oder nur mit der Anode elektrisch leitend verbunden. Sie dienen damit der elektrischen Verbindung der einzelnen Strukturen, welche jeweils die Kathode und die Anode bilden. Dies ist erforderlich, da die Anode und die Kathode aus lateral sich abwechselnden Strukturen bestehen, die untereinander nicht verbunden sein müssen.

Die laterale Anordnung von Anode und Kathode hat den großen Vorteil, dass eine hohe Energiedichte des Akkumulators auch bei größeren Bauhöhen realisiert werden kann. Gleichzeitig ermöglicht die größere Bauhöhe auch eine höhere Kapazität des Akkumulators (ohne dass dabei die Höhe zulässiger Entladeströme verringert wird). Da sich die Teilstrukturen, die jeweils die Anode und die Kathode bilden, senkrecht zum Pluspol und zum Minuspol erstrecken, sind die Wege, die der elektrische Strom zurücklegen muss, jeweils nur maximal so weit, wie der Akkumulator dick ist. Anders verhält sich dies bei geschichteten Akkumulatoren gemäß dem Stand der Technik, bei denen sich die Anoden und Kathoden in der Schichtfolge ablösen. Hierbei ist die Kontaktierung wesentlich problematischer, da in der Mitte des Sandwiches befindliche Schichten elektrisch schwer angesteuert werden können.

Alternativ wird die Aufgabe auch durch das eingangs angegebene Herstellungsverfahren gelöst, indem die Anode und die Kathode zwischen dem Pluspol und dem Minuspol lateral nebeneinander angeordnet werden. Außerdem werden die Anode und die Kathode durch den Elektrolyt und Separator voneinander getrennt, indem dieser zwischen der Anode und der Kathode hergestellt wird. Die so hergestellten Strukturen weisen die vorstehend beschriebenen Vorteile auf.

Vorzugsweise kann der Akkumulator zumindest teilweise durch ein additives Fertigungsverfahren hergestellt werden. Hierdurch lassen sich vorteilhaft auch komplizierte dreidimensionale Strukturen herstellen, wobei diese dann lateral gegenüber dem Pluspol und dem Minuspol ausgerichtet sind. Die Strukturen können beispielsweise einen mäandernden Verlauf aufweisen, wodurch durch die Grenzflächen zwischen der Anode und der Kathode vorteilhaft vergrößert werden.

Der Elektrolyt und der Separator können durch eine Struktur oder ein Material gebildet sein.

Zur Steigerung der Energiedichte werden die Oberflächen der energiespeichernden Materialien erfindungsgemäß vergrößert. Eine Vergrößerung der Oberfläche kann durch die Form- und Strukturgestaltung der Elektroden des Trägers des elektrochemisch aktiven Materials erreicht werden. Bei den Entladungs- und Ladungsvorgängen hat die Transportdistanz der Li-Ionen zwischen den Elektroden einen Einfluss auf die Leistung des Akkumulators. Vergrößert sich die Distanz, so geht die Leistungsdichte zurück. Dies ist insbesondere der Fall, wenn bei herkömmlichen Lithium-Ionen-Akkumulatoren, die zwei dimensional aufgebaut sind, die Energiedichte durch Erhöhung der Menge an aktivem Material, indem die Dicke der Elektroden zunimmt, verbessert wird. Konfiguriert man die Elektroden erfindungsgemäß jedoch dreidimensional, so bleibt die Transportdistanz der Lithiumionen mit zunehmender Elektroden-Dicke konstant, da diese lateral nebeneinander angeordnet sind.

Die Oberfläche der energiespeichernden Materialien kann durch die dreidimensionale Formgestaltung der Elektroden, dem Träger des aktiven Materials, vorteilhaft vergrößert werden.

Die Gestaltung der Elektroden erfolgt erfindungsgemäß durch eine Kombination verschiedener generativer Fertigungsverfahren. Demnach wird die angegebene Aufgabe erfindungsgemäß auch mit dem eingangs angegebenen Verfahren gelöst, indem
- die Anode und die Kathode zwischen dem Pluspol und dem Minuspol lateral nebeneinander hergestellt werden,
- die Anode und die Kathode durch den Elektrolyt und den Separator voneinander getrennt werden. Der Elektrolyt und der Separator können durch eine Struktur oder ein Material gebildet sein.

### Herstellung der Stromkollektoren (Kurz im Folgenden auch als Kollektoren bezeichnet)

Falls eine Formgebung der Stromkollektoren nicht erforderlich ist, werden die elektrochemisch aktiven Elektroden auch auf eine Kupfer- und/oder Aluminiumfolie gedruckt.

Anderenfalls können die Stromkollektoren mit einem selektiven Laser-Schmelzverfahren (SLM) und/oder einem (selektiven) Elektronenstrahlschmelzen (S)EBM gefertigt werden. Aluminium oder Kupfer wird in Pulverform in einer Schicht auf eine Grundplatte aufgebracht. Anschließend wird das aufgebrachte Pulver mittels Laserstrahl und/oder Elektronenstrahl lokal vollständig umgeschmolzen und bildet nach dem Erstarren eine feste Metallschicht. Die Grundplatte wird um den Betrag der Schichtdicke abgesenkt und erneut Pulver aufgetragen; dies wird solange wiederholt, bis die Schichten jeweils dick genug sind. Der verfestigte Kollektor wird vom überschüssigen Pulver gereinigt und sofort weiterbearbeitet. Schichtdicken von 15 bis 500 µm sind möglich, d, h. der Stromkollektor kann nach ca. zwei bis drei Zyklen bereits fertig sein. Da die Daten für die Führung des Laserstrahls und/oder des Elektronenstrahls aus einem 3D CAD-Körper mittels Software erzeugt werden (sog. Slicen), besteht eine große Geometriefreiheit der Elektrodenform.

Die Kupfer-Folie kann alternativ auch galvanisch über Elektroformen erzeugt werden.

### Herstellung der elektrochemisch aktiven Elektroden

Die energiespeichernden und elektrochemisch aktiven Elektroden werden mittels Fused Deposition Modelling (FDM, Schmelzschichtung), auch als Fused Filament Fabrication (FFF) bezeichnet, nahtlos auf die Stromkollektoren aufgetragen. Vorher werden die chemisch aktiven Substanzen (für die Anode mit Lithium beschichtetes Graphit, Graphen oder beschichtete Carbonnanotubes und für die Kathode elektrisch-leitende Titandioxid-Nadeln im Nanobereich, die mit LiFePo4 oder LiCoPO4 beschichtet sind) in einem spritzfähigen Bindemittel, das aus einem Thermoplast besteht, (z. B. Polyvinylidenfluorid, PVDF oder Acrylnitril-Butadien-Styrol, ABS) eingearbeitet und zu einem spritzfähigen Kunststoff-Faden verarbeitet.

Beim FFF- oder FDM-Verfahren werden 3D-CAD-Datenformate eines Werkstücks oder Modells verarbeitet Das 3D-Modell wird von einem Computerprogramm in eine Vielzahl von Schichten zerlegt (slicen). Diese Schichten werden von einem Extruder auf die Stromkollektoren aufgetragen. Dazu wird der Kunststofffaden in einer beheizbaren Düse geschmolzen, verflüssigt, unter Druck herausgepresst (Extrudieren) und entsprechend der Schichten des 3D-Modells auf die Stromkollektoren aufgebracht. Der aufgebrachte Kunststoff kühlt ab und härtet aus.

Auf die ausgehärtete Schicht wird die nächste Schicht des flüssigen Kunststoffs aufgetragen. So entsteht Schicht für Schicht, das reale Abbild des 3D-Models. Da die Daten für die Führung des Extruders aus einem 3D CAD-Modell mittels Software erzeugt werden, besteht eine große Geometriefreiheit der Elektrodenform.

Das FFF-Verfahren kann auch unter Ausschluss von Luftsauerstoff, unter einer Schutzgasatmosphäre (Stickstoff oder Argon), durchgeführt werden. Dabei werden die elektrochemisch aktiven Materialien vor einer Oxidation geschützt und die Haftung der gedruckten Schichten aneinander verbessert.

Gemäß einer vorteilhaften Ausgestaltung der Erfindung ist vorgesehen, dass mehrere Anoden und Kathoden einen Stapel bilden, welcher senkrecht zu dem ersten Kollektor und zu dem zweiten Kollektor ausgerichtet ist, wobei zwischen den Anoden und den Kathoden der Elektrolyt und der Separator angeordnet sind. Ein solcher Stapel lässt sich vorteilhaft sehr einfach fertigen. Insbesondere kann ein solcher Stapel durch Additive Manufacturing, also ein additives Fertigungsverfahren, hergestellt werden. Ist der Stapel fertiggestellt, kann dieser mit dem Minuspol und dem Pluspol abgedeckt werden, so dass diese beiden Pole die jeweiligen Stirnseiten der einzelnen Lagen des Stapels kontaktieren. Diese Kontaktierung erfolgt derart, dass die Kathoden mit dem Pluspol und die Anoden mit dem Minuspol (im Batteriebetrieb) elektrisch gekoppelt sind.

Die Stapelbauweise ermöglicht vorteilhaft eine vergleichsweise unkomplizierte Fertigung und gleichzeitig die Herstellung von Akkumulatoren mit einer hohen Leistungsdichte. Die Packung an Kathoden und Anoden kann dabei auf ein optimales Oberflächenverhältnis ausgelegt werden, wodurch sich vorteilhaft Akkumulatoren mit einer erhöhten Leistungsdichte erzeugen lassen. Gemäß einer weiteren Ausgestaltung der Erfindung ist vorgesehen, dass mehrere Anoden und Kathoden Säulen bilden, welche senkrecht zu dem ersten Kollektor und dem zweiten Kollektor ausgerichtet sind. Dabei sind die Anoden und Kathoden in einem Schachtbrettmuster zueinander angeordnet. Zwischen den Anoden und den Kathoden sind der Elektrolyt und der Separator angeordnet. Durch das schachbrettartige Anordnungsmuster ergeben sich vorteilhaft vergrößerte Flächen zwischen Anode und Kathode, wodurch vorteilhaft die Leistungsdichte des erzeugten Akkumulators steigen kann. Die Fertigung ist insbesondere mittels additiver Fertigungsverfahren durch den großen Spielraum einfach möglich.

Gemäß einer Ausgestaltung der Erfindung ist vorgesehen, dass die Kathode und oder die Anode sich von dem Pluspol bis zum Minuspol erstrecken, wobei zwischen der Kathode und dem Minuspol und/oder zwischen der Anode und dem Pluspol eine Isolationsschicht vorgesehen ist. Auf diesem Wege wird gewährleistet, dass die Kathode nur mit dem Pluspol und die Anode nur mit dem Minuspol elektrisch verbunden ist. Dies gewährleistet eine fehlerfreie Funktion des Akkumulators. Gleichzeitig ist es möglich, dass die jeweiligen Stirnseiten der senkrecht zum Pluspol und zum Minuspol verlaufenden Anode und Kathode komplett jeweils mit dem Pluspol und dem Minuspol abgedeckt sein können, was die Fertigung deutlich vereinfacht. Die Isolationsschichten gewährleisten dabei jeweils eine zuverlässige Isolation gegenüber jeweils derjenigen Elektrode des Akkumulators, welcher nicht mit dem betreffenden Pol kontaktiert werden soll.

Gemäß einer weiteren Ausgestaltung der Erfindung ist vorgesehen, dass eine Infill-Struktur aus einem Infill-Material räumlich in dem Akkumulator verteilt ist. Hierdurch lassen sich dreidimensionale Strukturen von Anoden und Kathoden ineinander verschachteln, wobei die Infill-Struktur (oder auch Füllstoff-Struktur), die aus einem elektrisch isolierenden Material gefertigt sein kann, sich zwischen den Anoden und den Kathoden Strukturen befindet. Insbesondere kann diese in Bereichen vorgesehen werden, welche nicht mit dem Elektrolyten und dem Separator ausgefüllt werden sollen oder können. Die dreidimensionalen Strukturen von Anode und Kathode führen vorteilhaft zu einer verbesserten Leitung des Stroms innerhalb des Akkumulators und zu einer Vergrößerung der Grenzfläche zwischen Anode und Kathode. Hierbei lässt sich die Leistungsdichte, die mit dem betreffenden Akkumulator erreicht werden kann, weiter steigern.

Gemäß einer Ausgestaltung des erfindungsgemäßen Verfahrens ist vorgesehen, dass der erste Kollektor und/oder zweite Kollektor aus Metall, insbesondere Kupfer oder Aluminium, mit einem pulverbasierten additiven Fertigungsverfahren, insbesondere selektivem Laserschmelzen und oder Elektronenstrahl schmelzen hergestellt werden. Die Kollektoren können vorteilhaft gleichzeitig den Pluspol und den Minuspol bilden. Sie sammeln damit den Strom, der aufgrund des Elektronenmangels beziehungsweise Überschusses in der Anode beziehungsweise der Kathode fließt, ein, wodurch vorteilhaft eine einfache elektrische Kontaktierung des Akkumulators möglich ist.

Gemäß einer Ausgestaltung des Verfahrens ist vorgesehen, dass die Anode und/oder die Kathode und/oder der Separator und/oder der Elektrolyt und/oder die Isolationsschicht durch Fused Deposition Molding (FDM) oder eine Fused Filament Fabrication (FFF) hergestellt werden. Hierbei handelt es sich um additive Fertigunsverfahren, mit denen sich polymere Materialen gut verarbeiten lassen, was für die Herstellung der genannten Teilstrukturen des Akkumulators von großem Vorteil ist.

Gemäß einer vorteilhaften Weiterbildung des Verfahrens ist vorgesehen, dass der erste Kollektor und/oder der zweite Kollektor aus einer Metallfolie, insbesondere aus Kupfer oder Aluminium, hergestellt werden. Hierbei handelt es sich vorteilhaft um ein alternatives Fertigungsverfahren, wonach für die Kollektoren, die eine vergleichsweise einfache Struktur aufweisen, kein additives Verfahren verwendet wird, sondern kostengünstig zu beschaffende Halbzeuge. Diese können dann beispielsweise mit den Anoden und den Kathoden verbunden werden, damit eine elektrische Übertragung des Stromes möglich ist. Da, wo eine solche Übertragung nicht erfolgen soll, also eine Isolationsschicht benötigt wird, kann der Kleber aus einem elektrisch isolierenden Material ausgebildet sein. Insbesondere kann durch ein Muster aus elektrisch leitendem und elektrisch isolierendem Kleber jeweils eine Übertragung des elektrischen Stroms von der Kathode zum Pluspol und von der Anode zum Minuspol gewährleistet werden.

Weitere Vorteile eines additiv hergestellten (gedruckten) Lithium-Ionen-Akkumulators gegenüber einer konventionellen zweidimensionalen Bauweise sollen im Folgenden erläutert werden.
- Vergrößerung der Elektrodenoberfläche auf vergleichbaren Raumverhältnisse, damit Zunahme der aktiven Oberflächen durch räumliche Verschachtelung der einzelnen Komponenten des Akkumulators.
- Gleichmäßige Verteilung der aktiven Materialien im Bindemittel bei der FFF gegenüber einem Slurry, der auf einen Träger gerollt oder gerakelt werden muss.
- Die gedruckte Lithium-Batterie wird in einem Stück gefertigt. Das Stapeln oder Wickeln der einzelnen Folien für die Elektroden, Stromkollektoren und Separatoren entfällt.
- Eine Injektion von flüssigem Elektrolyten in die konfektionierte Batterie entfällt, wenn der Elektrolyt auch gedruckt wird.
- Batterien in jeglicher Dicke und Größe können gedruckt werden. Zur Herstellung von Film-Lithium-Akkumulatoren für Mikrodevices entfallen die aufwendigen und teuren Sputter- und Verdampfungsmethoden, die aus der Halbleiter- oder optischen Industrie entlehnt sind.

Besondere Vorteile einer gedruckten Li-Batterie mit Fused Filament Fabrication (FFF) gegenüber der Tintentechnologie sind folgende:
- Beim FFF-Verfahren werden keine Lösemittel wie Wasser, Ethylenglykol oder Glycerin, sowie Viskositätsmittel verwendet, die die Funktion des Akkumulators beeinträchtigen könnten.
- Während des Druckens werden die aktiven Materialien gleichmäßiger verteilt, da sie in ein Kunststoff-Filament eingearbeitet sind.
- Beim FFF-Verfahren werden die Volumenkörper mit einer Füllstruktur (infill) gedruckt. Das bedeutet, dass zusätzlich zu der Formänderung der Elektrode von 2D zu 3D noch eine Oberflächenvergrößerung durch das Infill-Muster erreicht werden kann. Durch die Infill-Struktur wird die Elektrodenoberfläche in sich noch einmal vergrößert. Der Füllgrad des Volumenkörpers und das Infillmuster sind frei bestimmbar. Das Muster wird über ein 3D CAD-Modell per Software erzeugt.
- Durch die Zunahme der aktiven energiespeichernden Materialien wird die spezifische Energie (mit anderen Worten die Energiedichte, Dimension J pro kg) des Akkumulators erhöht.
- Mit Zunahme der Elektrodenfläche wird die Ladungsdichte reduziert. Das aktive Material kann sich auf eine größere Oberfläche verteilen und Hot Spots, die zu Kurzschlüssen führen, können vermieden werden. Damit wird auch die Explosionsgefahr der Batterie vermindert.
- Da beim 3D- Druck die Stromkollektoren, Anode, Separator, Polymerelektrolyt und Katode nahtlos aneinander gefügt werden, nimmt der Innenwiderstand ab und der Ladungstransport kann ohne Hindernisse erfolgen.
- In dem gedruckten 3D Li- Ionen- Akkumulator werden keine flüssigen Elektrolyte verwendet, damit erfolgt kein Verdampfen der Elektrolyte in die Gasphase, keine Exposition des Elektrolyten bei geöffneten Zellen, keine Entzündung des Elektrolyten bei Austritt aus der Zelle, keine Reaktion des Elektrolyten bei Austritt aus der Zelle
- Durch die Vergrößerung der Elektrodenoberfläche können in dem Lithium-Ionen-Akkumulator Materialien verwendet werden, die eine geringere Energiedichte haben, aber dafür wesentlich sicherer selbst bei stark variierenden Temperaturen sind. Durch die Temperaturerhöhung besteht dann eine geringere Gefahr eines Batteriebrands, sowie einer Explosion aufgrund eines entstehenden Überdrucks innerhalb der Zelle.
- Mit den gedruckten Lithium-Ionen-Akkumulatoren wird ein Beitrag zur Digitalisierung durch die Verwendung von 3D-CAD-Modellen geleistet. Die Akkumulatoren können leicht nach Kundenwusch designt werden. Man kann Zellen konzipieren, die als Hochenergie- und Hochleistungszellen arbeiten. Als Hochleistungszellen können sie auf die Umwandlung der chemischen in die elektrische Energie und umgekehrt sehr schnell reagieren, da die Transportwege der Lithium-Ionen in der Zelle kurz und konstant sind.
- Einsatz der gedruckten Lithium-Ionen-Akkumulatoren in der modernen Fahrzeugtechnik (KFZ, Flugzeug) durch deutliche Reduzierung von Gewicht und damit deutliche Erhöhung der Reichweite. Da die Zellen beide Eigenschaften einer hohen Energiedichte und einer hohen Leistungsdichte vereinen, können auch die Energien, die aus mechanischen Vorgängen (Reibung, Bremsen) entstehen, schnell gespeichert werden. Damit wird auch ein Beitrag zur Verringerung der Energieverluste in der modernen Fahrzeugtechnik geleistet.

Mit den gedruckten Akkumulatoren werden Batteriepacks leichter und flacher gebaut und können damit in den Türen und dem Boden eines Autos verstaut werden. In einem Flugzeug können die flachen Batteriepacks in den Seitenwänden der Fahrgastkabine, in das Dach und in die Flügel untergebracht werden.
- In der Schienenfahrzeugtechnik können elektrische Triebwagen (Straßen- und Untergrundbahnen) für den Notfall mit gedruckten Lithium-Ionen-Akkumulatoren ausgestattet werden. Sind in den Triebwagen Lithium-Ionen-Akkumulatoren vorhanden, können auch Bahnstrecken ohne Oberleitung und Stromschiene befahren werden. Sind im Winter Stromschienen sehr stark vereist, können zum Beispiel Straßenbahnen mit gedruckten Lithium-Ionen-Akkumulatoren betrieben werden.
- Gedruckte Lithium-Ionen-Akkumulatoren lassen sich auch als stationäre Speicher im Stromnetz zur Stabilisierung bei Stromschwankungen, insbesondere bei Nutzung von erneuerbaren Energien aus Wind und Sonne, verwenden, Auch eine 2nd-Life-Nutzung aus Flugzeug- und Elektrofahrzeugbatterien ist möglich.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar. Es zeigen:
Figur 1 ein Ausführungsbeispiel für den erfindungsgemäßen Lithium-Ionen-Akkumulator im Querschnitt schematisch,
Figur 2 ein anderes Ausführungsbeispiel des erfindungsgemäßen Lithium-Ionen-Akkumulators als Aufsicht, teilweise aufgebrochen,
Figur 3 ein weiteres Ausführungsbeispiel des erfindungsgemäßen Lithium-Ionen-Akkumulators in dreidimensionaler Darstellung, teilweise aufgebrochen,
Figur 4 bis 9 ein Ausführungsbeispiel des erfindungsgemäßen Verfahrens zur Herstellung eines Ausführungsbeispiels des erfindungsgemäßen Lithium-Ionen-Akkumulators in verschiedenen Fertigungsschritten,
Figur 10 dem Lithium-Ionen-Akkumulator, der gemäß den Figuren 4 bis 9 hergestellt wurde, als schematischen Querschnitt.

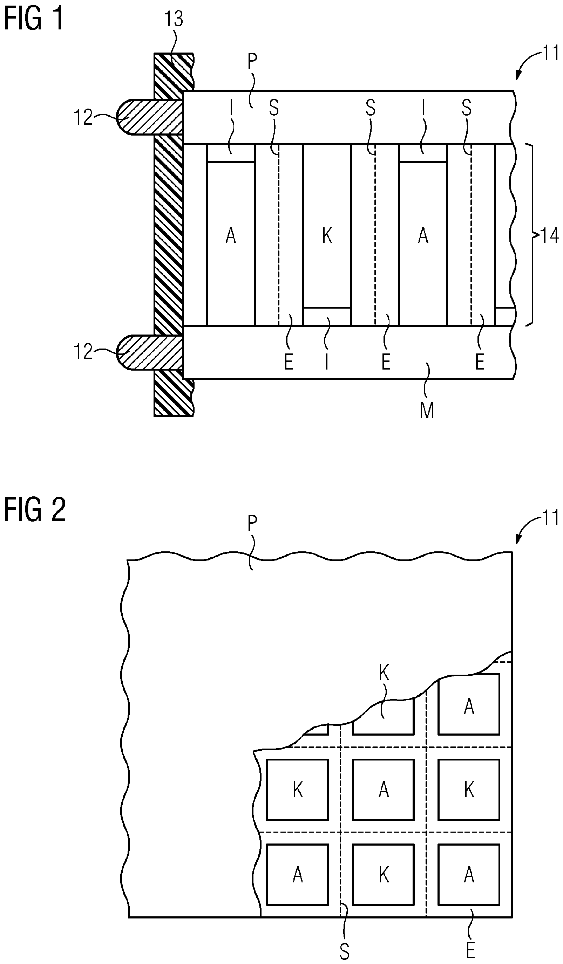

In Figur 1 ist ein Lithium-Ionen-Akkumulator 11 (im Folgenden auch kurz Akkumulator 11 genannt) dargestellt. Dieser weist einen Minuspol M und einen Pluspol P auf, die die Funktion von Kollektoren für den Strom übernehmen. Der Pluspol P und der Minuspol M sind jeweils mit einem Kontakt 12 versehen, damit diese nach außen zum Entladen und Aufladen kontaktiert werden können. Außerdem ist der Akkumulator in ein Gehäuse 13 eingegossen, welches den Akkumulator 11 schützt und elektrisch nach außen isoliert.

Der Aufbau des Akkumulators 11 ist folgendermaßen. Die Anoden A und die Kathoden K werden jeweils als Stapel 14 hergestellt, wobei die Anoden A und die Kathoden K einander abwechseln und jeweils durch einen Elektrolyten E voneinander getrennt sind. In dem Elektrolyten E ist außerdem ein Separator S vorgesehen, der die Funktion des Akkumulators 11 sicherstellt, indem dieser nur Lithium-Ionen durchlässt.

Der Stapel 14 ist derart geschichtet, dass die einzelnen Lagen des Stapels (gebildet durch Anoden A, Kathoden K, Elektrolyt E und Separatoren S) senkrecht zum Verlauf der Kollektoren, das heißt des Minuspols M und des Pluspols P verläuft. Hierdurch entsteht die Möglichkeit, dass der Strom jeweils über die Stirnseiten der Kathoden und der Anoden laufen kann, wodurch der Pluspol P und der Minuspol M einen hohen Strom leiten können. Hierdurch kann eine hohe Leistungsdichte des Akkumulators 11 abgerufen werden und wird nicht dadurch begrenzt, dass der Strom von den Kathoden und den Anoden nicht schnell genug abgeleitet beziehungsweise zuleitet werden kann. Damit in dem Akkumulator 11 kein Kurzschluss entsteht, sind die Stirnseiten der Anoden A durch eine Isolationsschicht I vom Pluspol P getrennt, sowie die Kathoden K durch eine Isolationsschicht I von dem Minuspol M.

In Figur 2 ist eine andere Anordnung für die Kathoden K und Anoden A dargestellt. Diese bilden ein Schachbrettmuster, das heißt, dass sich die Anoden und die Kathoden, wie sich in der Aufsicht unschwer erkennen lässt, ähnlich wie die Felder eines Schachbrettes (schwarz und weiß) einander abwechseln. Hierdurch entstehen große Übergangsflächen für die Lithium-Ionen, wobei die Kathoden K und Anoden A gitterförmig von dem Elektrolyten E und dem Separator S umgeben sind. Hierdurch entstehen quadratische Zellen, wobei die Kapazität des Akkumulators 11 durch die Größe des so gebildeten Schachfeldes und die Höhe der säulenartigen Kathoden K und Anoden A bestimmt wird.

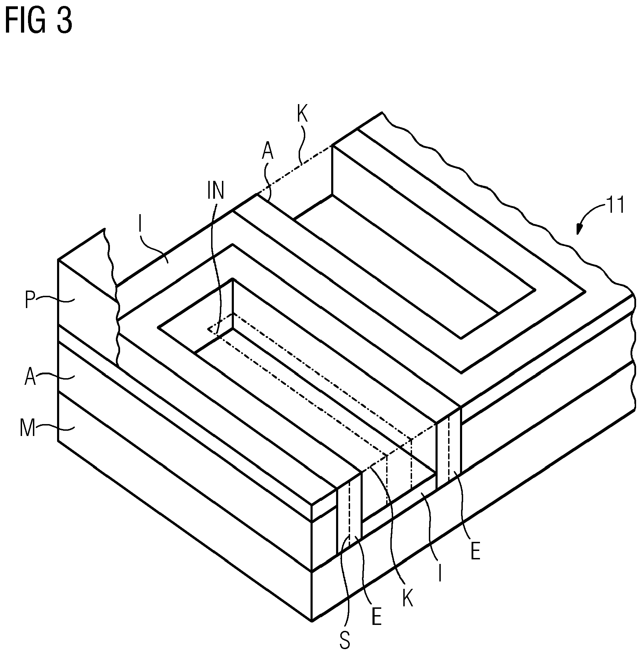

In Figur 3 ist ein Akkumulator 11 dargestellt, bei dem die Anode A einen mäandernden Verlauf aufweist. In den so gebildeten Zwischenräumen ist die Kathode K untergebracht. Zusätzlich ist dargestellt (siehe strichpunktierte Linie) dass Hohlräume des Akkumulators 11 durch eine Infill-Struktur IN (auch Füllmaterial-Struktur genannt) ausgefüllt werden können. Dieser Bereich ist aufgrund der dreidimensionalen Struktur, die in Figur 3 dargestellt ist, nicht durch ein Element des Akkumulators auszufüllen, so dass der entstehende Hohlraum durch die Infill-Struktur ausgefüllt werden kann.

Weiterhin ist zu erkennen, dass die Kombination aus Elektrolyt E und Separator S ebenfalls mäandernden Verlauf aufweist. Sie passt sich damit dem Verlauf der Anode A an und trennt damit zuverlässig die Anode von der in dem mäandernden Schleifen liegende Kathode K. Außerdem muss die Kathode K über die Isolationsschicht I vom Minuspol M isoliert werden. Genauso ist eine Isolationsschicht I vorgesehen, die den Pluspol P von der Anode A trennt.

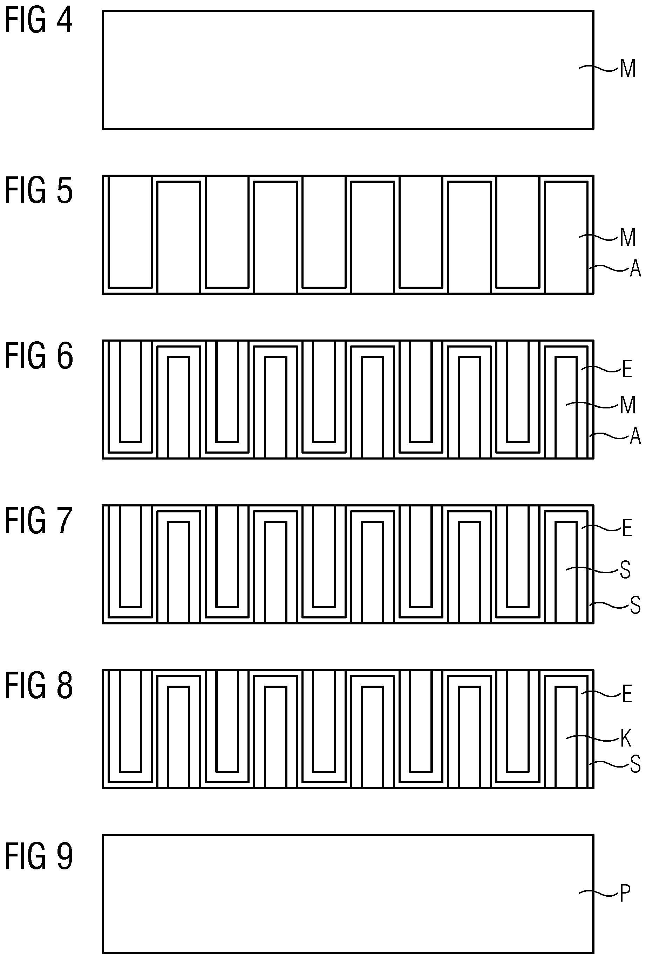

Gemäß den Figuren 4 bis 9 ist die folgende Druckabfolge für ein Ausführungsbeispiel des erfindungsgemäßen Verfahrens dargestellt.

Auf eine Kupferfolie als Minuspol M (Figur 4), die als Stromkollektor dient, wird die Anode A (PVDF mit den elektrochemisch aktiven Materialien) mittels FFF nach einem 3D-CAD-Modell in mehreren Lagen gedruckt (Figur 5). Anschließend wird die gesamte Kathodenoberfläche mit festem Elektrolyten E umhüllt (Figur 6). Bei dem festen Elektrolyten handelt es sich ebenfalls um PVDF mit einem Copolymer, Poly(vinylidene fluoride-co-hexafluoropropylene), in dem sich ein Lithiumsalz, z, B. Lithiumhexafluorphosphat oder Lithiumtetrafluorborat) und Keramikpartikel, z. B. Aluminiumoxid, Zirkonoxid, Siliziumoxid oder Siliziumcarbid, befindet. Die keramischen Zusätze sollen die Stabilität des festen Elektrolyten im Betrieb bei Wärmeentwicklung erhöhen. Der feste Elektrolyt wird ebenfalls mittels FFF gedruckt. Da unstrukturierte Metallfolien als Stromkollektoren verwendet werden, ist noch ein Separator zur Trennung von Kathoden- und Anodenraum erforderlich. Zum Drucken des Separators können z. b. Polyethylen (PE)-, Polypropylen (PP)- oder Polyethylenterephthalat (PET)-Filamente, die zur Erhöhung der Temperaturstabilität keramische Werkstoffe (z. B. Al2O3, ZrO2, SiC, SiO2 oder Gemische) enthalten, verwendet werden (Figur 7). Der Separator wird über die Anode und den Bereich der Kupferfolie, der nicht von Anode und Polymerelektrolyt abgedeckt wird, platziert. Der Separator enthält keine elektrisch leitfähigen Komponenten. Das verbleibende freie Volumen wird mit Kathodenmaterial (PVDF mit dem chemisch aktiven Material) gefüllt (Figur 8). Dazu wird das Kathodenmaterial ebenfalls mittel FFF gedruckt. Abschließend wird auf die Kathoden- und die Polymerelektrolyt-Fläche eine Aluminiumfolie als Stromkollektor für die Kathode laminiert, die den Pluspol P bildet (Figur 9).

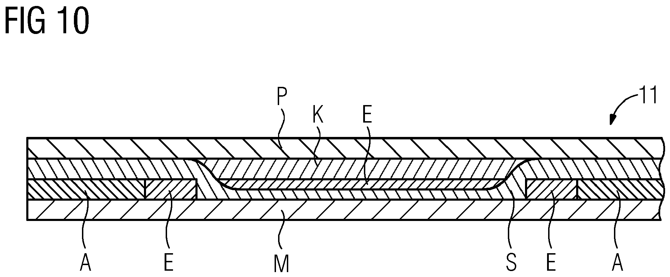

Der Figur 10 lässt sich entnehmen, dass das Verfahren gemäß den Figuren 4 bis 9 zu einem Aufbau des Akkumulators 11 führt, der eine Art Dünnschicht-Technologie verwirklicht. Man erkennt, dass anders als in Figur 3 die einzelnen Elemente, das heißt Anode A, Kathode K, Elektrolyt E und Separator S viel dünner ausgelegt sind. Allerdings ergibt sich derselbe mäandernde Verlauf für die Anode A, wie dieser zu Figur 3 bereits beschrieben wurde (dies geht auch aus den Figuren 4 bis 9 hervor). Der Separator ist allerdings in seinem Verlauf so gewählt, dass er gleichzeitig als Isolationsschicht für den Pluspol und den Minuspol zum Einsatz kommt. Hier ergibt sich ein Unterschied zu der dargestellten Anordnung gemäß Figur 3.

### Bezugszeichenliste

- 11: Akkumulator
- M: Minuspol
- P: Pluspol
- 12: Kontakt
- 13: Gehäuse
- A: Anode
- K: Kathode
- 14: Stapel
- E: Elektrolyt
- S: Separator
- I: Isolationsschicht
- IN: Infill Struktur

## Patentansprüche

1. Lithium-Ionen-Akkumulator, aufweisend einen Elektrolyt (E), in dem eine Kathode (K) und eine von dieser durch einen Separator (S) getrennte Anode (A) vorgesehen sind,
• wobei ein erster Kollektor als Minuspol (M) des Akkumulators an der Anode und ein zweiter Kollektor als Pluspol (P) des Akkumulators an der Kathode vorgesehen ist,
• wobei der Akkumulator als Sandwichstruktur ausgebildet ist, deren jeweils äußere Lagen durch den Minuspol (M) und den Pluspol (P) gebildet werden,
**dadurch gekennzeichnet,**
**dass**
• die Anode (A) und die Kathode (K) zwischen dem Pluspol (P) und dem Minuspol (M) lateral nebeneinander angeordnet sind und
• die Anode (A) und die Kathode (K) durch den Elektrolyt (E) und den Separator (S) voneinander getrennt sind.

2. Lithium-Ionen-Akkumulator nach Anspruch 1,
**dadurch gekennzeichnet,**
**dass** die Anode (A) und/oder die Kathode (K) einen mäandernden Verlauf aufweist und die Kathode (K) und die Anode(A) lateral ineinander verschachtelt sind.

3. Lithium-Ionen-Akkumulator nach Anspruch 1,
**dadurch gekennzeichnet,**
**dass** mehrere Anoden (A) und Kathoden (K) einen Stapel bilden, welcher senkrecht zu dem ersten Kollektor und dem zweiten Kollektor ausgerichtet ist, wobei zwischen den Anoden (A) und den Kathoden (K) der Elektrolyt (E) und der Separator (S) angeordnet sind.

4. Lithium-Ionen-Akkumulator nach Anspruch 1,
**dadurch gekennzeichnet,**
**dass** mehrere Anoden (A) und Kathoden (K) Säulen bilden, welche senkrecht zu dem ersten Kollektor und dem zweiten Kollektor ausgerichtet sind, wobei
• Anoden (A) und Kathoden (K) in einem Schachbrettmuster zueinander angeordnet sind,
• zwischen den Anoden (A) und den Kathoden (K) der Elektrolyt (E) und der Separator (S) angeordnet sind.

5. Lithium-Ionen-Akkumulator nach einem der voranstehenden Ansprüche,
**dadurch gekennzeichnet,**
**dass** die Kathode (K) und/oder die Anode (A) sich von dem Pluspol (P) bis zum Minuspol (M) erstrecken, wobei zwischen der Kathode (K) und dem Minuspol (M) und/oder zwischen der Anode (A) und dem Pluspol (P) eine Isolationsschicht (I) vorgesehen ist.

6. Lithium-Ionen-Akkumulator nach einem der voranstehenden Ansprüche,
**dadurch gekennzeichnet,**
**dass** eine Infillstruktur (IN) aus einem Infill-Material räumlich in dem Akkumulator verteilt ist.

7. Verfahren zum Herstellen eines Lithium-Ionen-Akkumulators, aufweisend einen Elektrolyt (E), in dem eine Kathode (K) und eine von dieser durch einen Separator (S) getrennte Anode (A) vorgesehen sind,
• wobei ein erster Kollektor als Minuspol (M) des Akkumulators an der Anode und ein zweiter Kollektor als Pluspol (P) des Akkumulators an der Kathode vorgesehen wird,
• wobei der Akkumulator als Sandwichstruktur ausgebildet wird, deren jeweils äußeren Lagen durch den Minuspol (M) und den Pluspol (P) gebildet werden,
**dadurch gekennzeichnet,**
**dass**
• die Anode (A) und die Kathode (K) zwischen dem Pluspol (P) und dem Minuspol (M) lateral nebeneinander angeordnet werden,
• die Anode (A) und die Kathode (K) durch den Elektrolyt (E) und den Separator (S) voneinander getrennt werden.

8. Verfahren nach Anspruch 7,
**dadurch gekennzeichnet,**
**dass** der Lithium-Ionen-Akkumulator zumindest teilweise durch ein additives Fertigungsverfahren hergestellt wird.

9. Verfahren nach Anspruch 8,
**dadurch gekennzeichnet,**
**dass** der erste Kollektor und/oder der zweite Kollektor aus Metall, insbesondere Kupfer oder Aluminium, mit einem pulverbettbasierten additiven Fertigungsverfahren, insbesondere selektivem Laserschmelzen (SLM) und/oder selektivem Elektronenstrahl schmelzen (EBM), hergestellt werden.

10. Verfahren nach Anspruch 8 oder 9,
**dadurch gekennzeichnet,**
**dass** die Anode (A) und/oder die Kathode (K) und/oder der Separator (S) und/oder der Elektrolyt (E) und/oder die Isolationsschicht (I) durch ein Fused Deposition Modeling (FDM) oder eine Fused Filament Fabrication (FFF) hergestellt werden.

11. Verfahren nach einem der Ansprüche 7 bis 10,
**dadurch gekennzeichnet,**
**dass** der erste Kollektor und/oder der zweite Kollektor aus einer Metallfolie, insbesondere aus Kupfer oder Aluminium, hergestellt werden.
